# EUROPEAN PATENT APPLICATION

(11) **EP 0 601 598 A2**
(43) Date of publication of application: **15.06.1994**
(21) Application number: 93119970.7
(22) Date of filing: 10.12.1993
(51) Int. Cl.: G11B 23/03, G11B 23/033

(54) **Method and apparatus for assembling shutter spring in magnetic disk cartridge**

(30) Priority: 10.12.1992 JP 352185/92
(71) Applicant: FUJI PHOTO FILM CO., LTD., Kanagawa (JP)
(72) Inventor: Kitamura, Hiroyuki, c/o Fuji Photo Film Co., Ltd., Odawara-shi, Kanagawa (JP); Mizuta, Akira, c/o Fuji Photo Film Co., Ltd., Odawara-shi, Kanagawa (JP)
(74) Representative: Grünecker, Kinkeldey, Stockmair & Schwanhäusser Anwaltssozietät

(57) **Abstract**

A shutter spring incorporating method and apparatus in which the insertion of a shutter spring for a magnetic disk cartridge can surely be conducted even at a high speed while attaining an excellent workability. In a path along which a shutter spring is transferred to an opening of a magnetic disk cartridge, disposed are a posture guide which makes one end portion of the shutter spring precede the other end portion, and a pusher by which the shutter spring the posture of which is adjusted is first inserted into the opening so as to be engaged with an engaging portion formed in the magnetic disk cartridge. The shutter spring is further pushed so that the whole of the shutter spring is inserted through the opening.

## Description

### BACKGROUND OF THE INVENTION

The invention relates to a method for incorporating a shutter spring for closing a shutter of a magnetic disk cartridge in the cartridge, and also to an assembling apparatus for performing the assembling method.

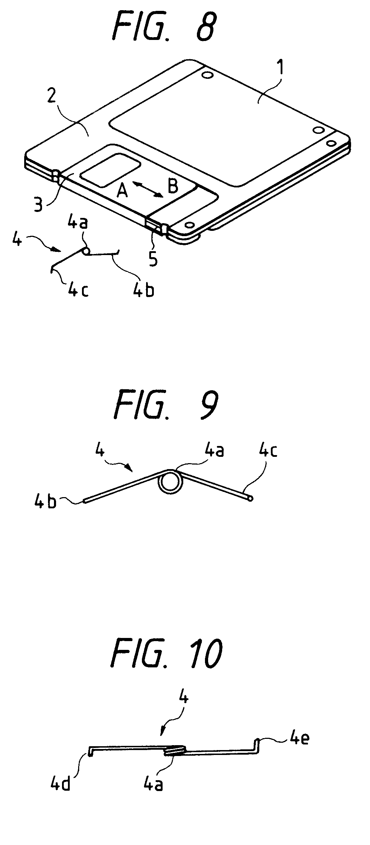

As an example of a conventional magnetic disk cartridge, a 3.5-inch floppy disk will be described with reference to Figs. 8 to 12.

First, the overall configuration of the floppy disk 1 will be described referring to Fig. 8. A plate-like case 2 houses a magnetic disk (not shown). A dustproof shutter 3 which can slide in the directions of arrows A and B is disposed on the outer side face of the case 2. An insertion opening 5 into which a shutter spring 4 for urging the dustproof shutter 3 in the direction of arrow A is to be inserted is opened on a side face of the case 2.

The shutter spring 4 has the form of a torsion coil spring as shown in Figs. 9 and 10. A pair of end portions 4b and 4c extend in opposite directions from the middle portion, which is a coil portion 4a of about one to two turns. Bent portions 4d and 4e, which are directed in opposite directions, are formed at the front ends of the pair of end portions 4b and 4c, respectively.

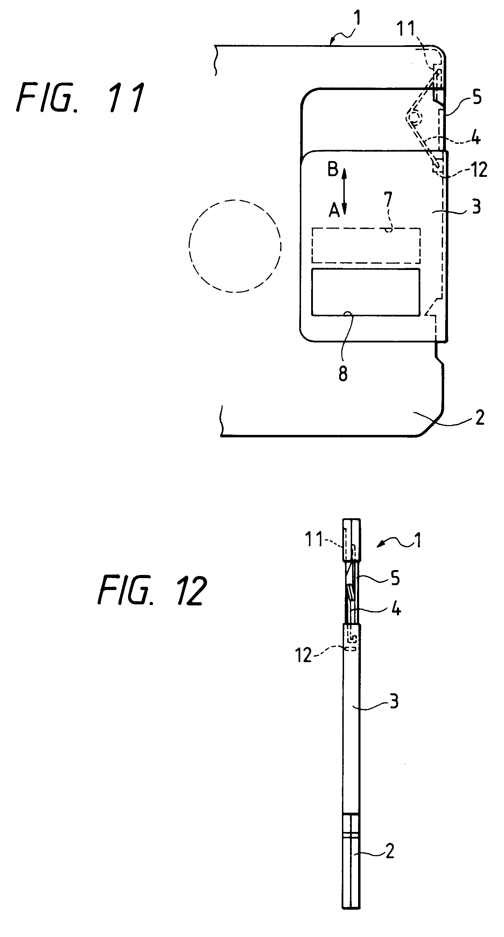

The state of the inserted shutter spring 4 will be described with reference to Figs. 11 and 12. One of the bent portion 4d and 4e is engaged with an engaging portion 11 formed at the right area in the insertion opening 5, and the other of the bent portion 4d and 4e is engaged with an engaging portion 12 formed on the shutter 3.

As a result, the shutter 3 is urged by the shutter spring 4 in the direction of arrow A shown in Fig. 11, so that an opening 7, which is formed in the case 2 and through which a magnetic head is to be inserted, is closed by the shutter 3, thereby protecting the magnetic disk from dust.

When the floppy disk 1 is used in an apparatus such as a word processor, the shutter 3 is urged in the direction of arrow B so that an opening formed in the shutter 3 communicates with the magnetic head insertion opening 7. This allows the magnetic head to contact the magnetic disk and conduct a recording or reproducing operation.

The shutter spring 4 is inserted or incorporated through the insertion opening 5 into the case 2. Conventionally, the following methods for performing this function have been known.

Japanese Patent Publication (Kokai) No. Hei. 4-11373 discloses a spring assembling mechanism in which a slant plate having a notch on the slanted portion is reciprocated in the moving directions of a shutter, and a shutter spring is incorporated through an insertion opening into a floppy disk while an end of the shutter spring is engaged with the notch.

Japanese Patent Publication (Kokai) No. Sho. 62-57185 discloses an automatic shutter spring inserting apparatus in which one leg of a spring is inserted through an insertion opening while seizing the other leg of the spring, and the seized spring leg is then inserted by a pusher into a floppy disk.

The assembling mechanism disclosed in Japanese Patent Publication (Kokai) No. Hei. 4-11373 has problems in that it is difficult to incorporate a shutter spring at a predetermined insertion position in a floppy disk, and is difficult to conduct the assembling operation at a high speed because the slant plate is reciprocated.

In the automatic shutter spring inserting apparatus disclosed in Japanese Patent Publication (Kokai) No. Sho. 62-57185, when the positional relationship between a floppy disk and a shutter spring deviates from the optimum relationship, the insertion of the shutter spring is liable to fail. Since a chuck for seizing a shutter spring moves in a complicated manner, moreover, the apparatus is hindered from operating at a high speed.

As described above, all the prior art methods of incorporating a shutter spring are lacking in reliability, and it is difficult to improve their working efficiency.

In order to solve these problems, the applicant has proposed an apparatus for assembling a magnetic disk cartridge as disclosed in Japanese Patent Publication (Kokai) No. Sho. 63-171488. The proposed apparatus includes a guide groove for holding a shutter spring in a bent state, a guide member which can move between a spring insertion opening of a magnetic disk cartridge and a spring supply region, and a movable pushing member which enters the guide groove to push the shutter spring, thereby incorporating the shutter spring through the opening into the case.

According to this apparatus, it is possible to prevent the configuration from becoming complicated and the assembling operation can be conducted at a high speed. However, it has become apparent that also the apparatus has a problem in reliability.

This problem will be described. In the apparatus having the configuration described above, the whole of the shutter spring is pushed by one stroke during the pushing operation, and therefore the incorporating speed can be increased to a very high level. However, as the incorporating speed is increased, there sometimes occurs a case where one end of a shutter spring cannot be correctly engaged with a projection in a shutter.

### SUMMARY OF THE INVENTION

It is an object of the invention to provide an assembling method and assembling apparatus in which an assembly operation for a shutter spring for a magnetic disk cartridge can surely be conducted even at a high speed while attaining an excellent workability.

The above object of the invention can be solved by a shutter spring assembling method for incorporating a shutter spring in a magnetic disk cartridge of a type including a case for housing a magnetic disk, a shutter which is slidably disposed on an outer side face of the case, the shutter spring which has a substantially V-like shape and which resiliently urges the shutter in one direction starting from one end of the case, and an opening through which the shutter spring is to be inserted into the case, wherein during a process of transferring the shutter spring toward the opening by pushing a part of the spring while substantially maintaining the shutter spring on an extended plane of a face of the case, one end portion of the shutter spring, which portion is to be engaged with the case, precedes the other end portion, the preceding one end portion is engaged with an engaging portion in the case, and then the whole of the shutter spring is pressingly inserted into the opening by further pushing the shutter spring so that the other end portion is engaged with the shutter, thereby incorporating the shutter spring into the case.

The objects of the invention further can be attained an assembling apparatus for incorporating a shutter spring into a magnetic disk cartridge of a type including a case for housing a magnetic disk, a shutter which is slidably disposed on an outer side face of the case, the shutter spring which has a substantially V-like shape and which resiliently urges the shutter in one direction starting from one end of the case, and an opening through which the shutter spring is to be inserted into the case, the apparatus comprising: a posture guide having guide grooves through which the shutter spring supplied from spring moving means can be moved under a state where one end portion of the shutter spring precedes the other end portion; a guide member having pushing guide grooves which can communicate with the guide grooves of the posture guide and through which the shutter spring is transferred to the opening; and a pusher which can enter the pushing guide grooves, which pushes the other end portion at a desired angle by a front end face, to insert the one end portion into the opening, thereby engaging the one end portion with an engaging portion formed in the case, and which further pushes the other end portion to pressingly insert the whole of the shutter spring into the case through the opening.

The objects of the invention can be achieved more efficiently by an assembling apparatus for a shutter spring into a magnetic disk cartridge, wherein the pushing guide grooves have a spring insertion angle ϑ₁, and a sum of the spring insertion angle ϑ₁ and a pushing face angle ϑ₂ at which the front end face of the pusher pushes the shutter spring is substantially 180 degrees.

### BRIEF DESCRIPTION OF THE DRAWINGS

Fig. 1 is a perspective view of a shutter spring assembling apparatus constructed in accordance with a preferred embodiment of the invention;
Fig. 2 is a side view showing the configuration of the main portions of the spring assembling apparatus;
Fig. 3 is a section view showing the configuration of the main portions of a guide member;
Fig. 4 is a schematic view illustrating an operation of assembling a shutter spring;
Fig. 5 is a schematic view illustrating an operation of assembling a shutter spring;
Fig. 6 is a schematic view illustrating an operation of assembling a shutter spring;
Fig. 7 is a schematic view illustrating an operation of assembling a shutter spring;
Fig. 8 is a perspective view of a magnetic disk cartridge;
Fig. 9 is a plan view showing the shape of a shutter spring;
Fig. 10 is a side view showing the shape of the shutter spring;
Fig. 11 is a plan view of the magnetic disk cartridge; and
Fig. 12 is a side view of the magnetic disk cartridge.

### DESCRIPTION OF THE PREFERRED EMBODIMENTS

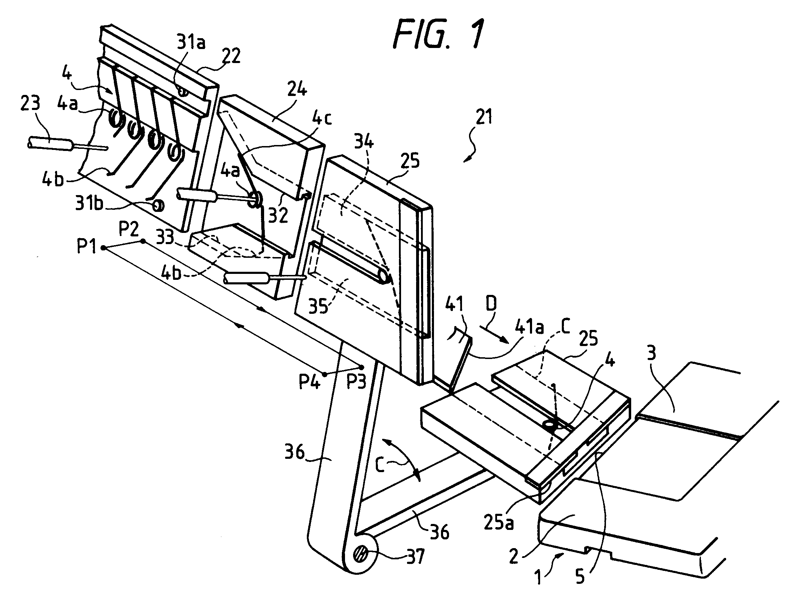

Hereinafter, preferred embodiments of the invention will be described with reference to Figs. 1 to 7.

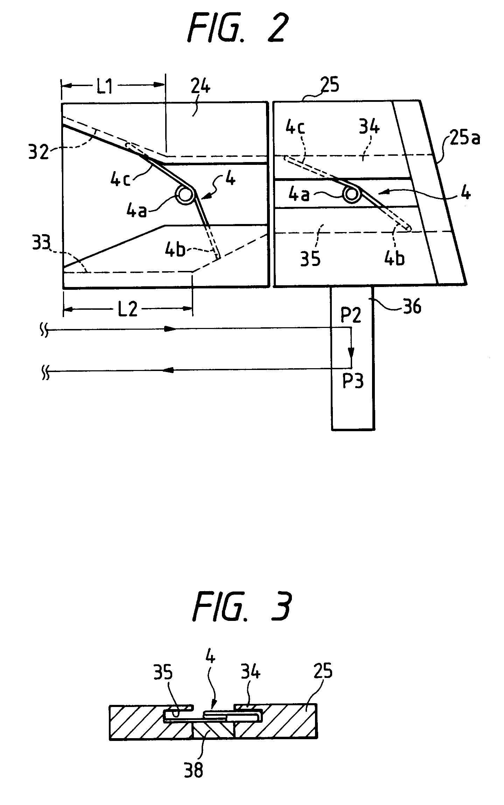

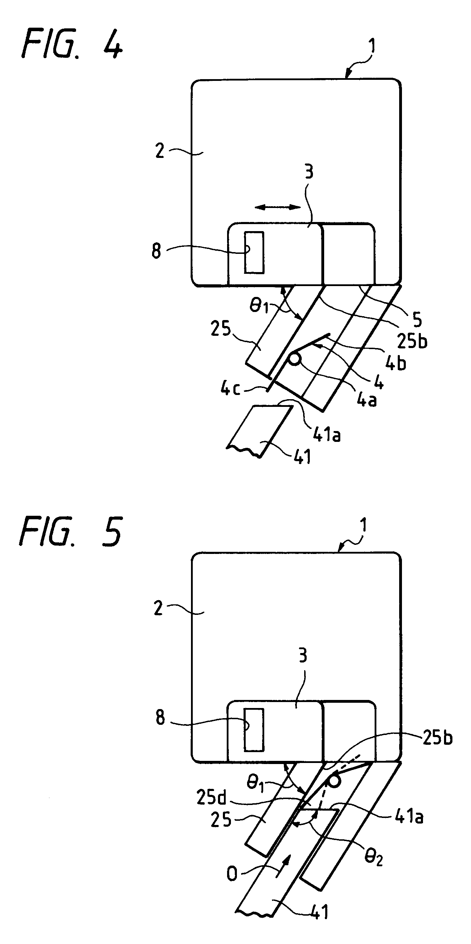

Fig. 1 is a perspective view showing the configuration of a shutter spring incorporating apparatus of the invention, Fig. 2 is a side view of the main portions of the apparatus, Fig. 3 is a section view of a guide member, and Figs. 4 to 7 are schematic views illustrating a method for incorporating a shutter spring.

A floppy disk 1 has the same configuration as that of a conventional disk, and therefore the embodiments will sometimes be described referring to Figs. 11 and 12.

The shutter spring incorporating apparatus 21 includes a vibrating feeder 22, an escape pin 23, a posture guide 24, a guide member 25, *etc*.

The vibrating feeder 22 is constructed so as to vertically vibrate at a small amplitude and closely arrange a plurality of shutter springs 4, which are sequentially supplied, in such a manner that the shutter spring 4 caught by stoppers 31a and 31b is at the head and shutter springs 4 supplied later are placed behind it.

The escape pin 23 (spring moving means) transfers the shutter spring 4 from the vibrating feeder 22 to the posture guide 24, and then to the guide member 25. The escape pin 23 moves along a locus which has a substantially rectangular shape, as indicated by positions P1 to P4 in Fig. 1.

The escape pin 23 is first positioned at the stand-by position P1. When the shutter spring 4 is to be transferred, the escape pin 23 is then moved in the following manner: The escape pin 23 is moved from the position P1 to the position P2 so as to be inserted into the coil portion 4a of the shutter spring 4 which is at the head. Thereafter, the escape pin 23 is moved as it is to the position P3, whereby the shutter spring 4 is transferred to the guide member 25. Then, the escape pin 23 is moved from the position P3 to the position P4 so as to be extracted from the coil portion 4a, and returned to the position P1.

The posture guide 24 adjusts the posture of the shutter spring 4 so that one end portion, for example, the end portion 4b, precedes the other end portion 4c. The operation of adjusting the spring posture will be described with reference to Fig. 2. As shown in Fig. 2, the receiving side, *i.e*., the left side of the posture guide 24 is configured so that the shutter spring 4 is inserted while the end portions 4b and 4c are in the open state. In an upper guide groove 32, the portion of the distance L1 is downward inclined as moved in the progressing direction, or toward the position P3, or configured as a downward slant.

By contrast, in a lower guide groove 33, the portion of the distance L2 extends horizontally, and the remaining portion is configured as an upward slant. The distance L1 is shorter than the distance L2, or L1 < L2.

In the state where the shutter spring 4 is transferred to the entrance of the posture guide 24, the end portions 4b and 4c of the shutter spring 4 stand substantially upright. During the transfer in the posture guide 24, the other end portion 4c touches the guide groove 32. This causes the shutter spring 4 to be urged counterclockwise about the coil portion 4a. By contrast, no action is applied to the end portion 4b within the distance L2. Therefore, as the shutter spring 4 is transferred toward the position P3, the end portion 4b precedes the end portion 4c.

The function of causing the end portion 4b of the shutter spring 4 to precede the end portion 4c, *i.e*., the function of adjusting the posture of the shutter spring 4, is continued until the end portion 4c passes through the portion of the distance L1 of the guide groove 32. As a result, the shutter spring 4 enters a pair of upper and lower guide grooves 34 and 35 in such a manner that the end portion 4b of the shutter spring 4 first enters the lower guide groove 35, and then the end portion 4c enters the upper guide groove 34.

As shown in Fig. 1, the guide member 25 is supported by an arm 36 which swings about a support shaft 37 in, for example, the directions of arrows C. The arm 36 conducts the positioning operation so that the guide member 25 is selectively positioned at one of the location where the guide member 25 is flush with the posture guide 24 and the other location where the guide member 25 is flush with the floppy disk 1.

When the guide member 25 is positioned so as to be flush with the posture guide 24, the shutter spring 4 is transferred from the posture guide 24 to the guide member 25, and, when the guide member 25 is positioned so as to be flush with the floppy disk 1, the shutter spring 4 is inserted into the floppy disk 1.

As shown in Fig. 3, for example, a permanent magnet 38 is disposed on the back of the guide member 25 so that the shutter spring 4 is attracted so as to be prevented from moving. Alternatively, a suction mechanism using air may be used.

One end face of the guide member 25 is formed as a slant face 25a, as clearly shown in Fig. 2. The floppy disk 1 is positioned so as to extend along the slant face 25a.

Next, the operation of inserting the shutter spring 4 will be described.

A plurality of the shutter springs 4 are sequentially supplied by a transporting device (not shown) to the vibrating feeder 22, and are moved toward the posture guide 24 while being arranged in a row by vibration. When the shutter spring 4 at the head reaches a predetermined position, the escape pin 23, which is previously set at the position P1, is moved to the position P2 so that the front end of the escape pin 23 is passed through the coil portion 4a of the shutter spring 4. Under this state, the escape pin 23 is moved from the position P2 to the position P3, and therefore the shutter spring 4 is transferred from the vibrating feeder 22 to the guide member 25 through the posture guide 24.

During this transfer, the posture of the shutter spring 4 is adjusted by the operation of the posture guide 24 so that the one end portion 4b of the shutter spring 4 precedes the other end portion 4c.

The movement of the escape pin 23 to the position P3 causes the shutter spring 4, in which the end portion 4b precedes the end portion 4c, to be transferred to the guide member 25. The escape pin 23 is driven to move to the position P4, and the front end of the escape pin 23 is extracted from the coil portion 4a. During this process, the shutter spring 4 is prevented from being positionally deviated by the attraction force due to the permanent magnet 38.

The escape pin 23 is driven to return to the position P1, and the arm 36 is swung. Therefore, the guide member 25 which holds the shutter spring 4 is positioned so as to be flush with the floppy disk 1.

When this state is seen in a plan view, as shown in Figs. 4 to 7, the floppy disk 1 obliquely contacts the guide member 25 at a spring insertion angle ϑ₁, which is the desired angle, and the insertion opening 5 communicates with the guide grooves 34 and 35 (see Fig. 3) formed in the guide member 25 and which function as the pushing guide grooves of the invention. For example, the angle ϑ₁ can be set within the range of equal to or greater than 60 degrees and less than 90 degrees.

The configuration in which, as described above, the guide grooves of the guide member 25 are slanted at a predetermined angle with respect to the opening edge of the insertion opening 5, can perform the following function: When the one end portion 4b of the shutter spring 4 is first inserted toward the engaging portion 11 with which the end portion 4b is to be engaged, the bent portion of the end portion 4b makes contact with a partition wall (not shown) formed in the vicinity of the edge portion of the insertion opening 5, whereby a force is generated so as to facilitate the insertion of end portion 4b into the engaging portion 11.

A shutter spring is first surely inserted into the opening at one end portion which precedes the other end portion, and the other end portion is snapped after the one end portion is positioned. Therefore, the behavior of the spring is stabilized so that, even when the incorporating operation is conducted at a high speed, the spring can surely be incorporated into a magnetic disk cartridge.

In front of the guide member 25 (the side opposite to the floppy disk) is disposed a pusher 41 which can pass through the guide grooves 34 and 35.

The pusher 41 is provided for pushing the shutter spring 4, which is fitted into and supported between the guide grooves 34 and 35, into the insertion opening 5. The front end 41a has an end face which is a slant face having a pushing insertion angle ϑ₂. The angles ϑ₁ and ϑ₂ are set so as to have a mutual relationship of ϑ₁ + ϑ₂ ≈ 180 degrees. In other words, the face of the front end 41a is substantially parallel with the edge portion of the case in which the insertion opening 5 is formed. The configuration in which the front end of the pusher 41 is formed as a slant face enables the end portion 4c of the shutter spring 4 to be positioned at the innermost portion 25d formed by the slant face and a guide groove 25b irrespective of the position of the slant face with which the end portion 4c first contacts. This allows the shutter spring 4 to be pushed toward the insertion opening 5 under a stabilized state.

Hereinafter, the insertion of the shutter spring 4 by the pusher 41 will be described.

The pusher 41 in the state shown in Fig. 4 is moved in the direction of arrow D so that the shutter spring 4 fitted into the guide grooves 34 and 35 is pushed toward the insertion opening 5. In this process, since the shutter spring 4 is pushed while the end portion 4b precedes the end portion 4c, the end portion 4b first enters the insertion opening 5 as shown in Fig. 5, and then contacts the engaging portion 11, which has been described in conjunction with Fig. 12. Under this state, the pusher 41 is continued to be moved, and therefore the end portion 4b moves rightward along the engaging portion 11 and stops at the innermost portion.

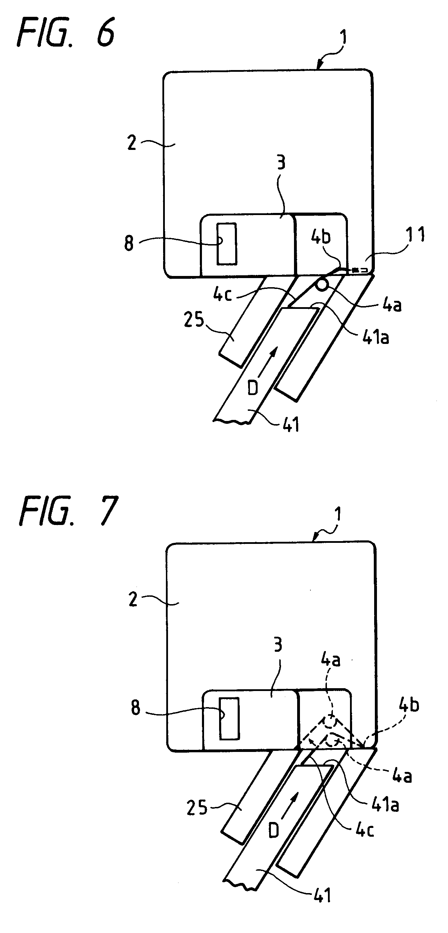

When the pusher 41 is further continued to be moved, the whole of the shutter spring 4 is inserted through the insertion opening 5 into the inside as shown in Figs. 6 and 7. At the time when the whole of the shutter spring 4 is inserted into the floppy disk 1, the shutter spring 4 is opened by its own resilient force, and the end portion 4c is engaged with one end of the dustproof shutter 3, as shown by a broken line in Fig. 7, thereby completing the insertion or assembly of the shutter spring 4.

Then, the pusher 41 is returned to the original position and placed in a stand-by state so that the next incorporating operation can be started. Also the arm 36 is returned so that the guide member 25 is returned to be flush with the posture guide 24 so that the next incorporating operation can be started.

As described above, according to the shutter spring method and apparatus for assembling a shutter spring for a magnetic disk cartridge of the invention, the posture of the shutter spring 4 is adjusted by the posture guide 24 in the path along which the shutter spring 4 is transferred to the insertion opening 5 of the magnetic disk cartridge, so that the one end portion of the shutter spring 4 precedes the other end portion, and furthermore the shutter spring 4 in the guide member 25 is pushed by the pusher 41 at the desired angle with respect to the insertion opening 5. Accordingly, the preceding one end portion is first engaged with the engaging portion formed in the case. When the other end portion is further pushed by the pusher 41, the whole of the shutter spring 4 is incorporated through the insertion opening 5 into the case 2, and the resilient force of the shutter spring itself causes the other end to be engaged with one end of the shutter 3, thereby completing the assembly of the shutter spring 4.

The invention is not restricted to the embodiment described above. Instead of providing the arm 36 is configured as one swinging arm, for example, the arm may be configured as two swinging arms. In this modification, two shutter spring supply systems are provided, and the process of supplying shutter springs is conducted at the side of one arm while the process of pushing a shutter spring is conducted at the side of the other arm. Alternatively, a number of arms can be arranged in a circular shape so that the assembly operation is conducted while rotating the arms. In this way, the invention may be modified in various manners.

In the above-described embodiment, only one case 2 is shown in the figures. According to the invention, when a transporting system which can transport a plurality of cases 2 in parallel is used, a plurality of arm structures corresponding to the transporting system may be conjointly used, thereby remarkably improving productivity.

As described above, the assembling method and apparatus for a shutter spring for a magnetic disk cartridge according to the invention includes, in a path along which a shutter spring is transferred to an opening of the magnetic disk cartridge, a posture guide for making one end of the shutter spring precede the other end of the shutter spring, and a pusher by which the shutter spring the posture of which is adjusted is pushed at a desired angle so that the one end portion is first inserted into the opening and the shutter spring is further pushed so that the whole of the shutter spring is inserted through the opening.

Accordingly, since the shutter spring is first surely inserted at one end portion which precedes the other end portion and the other end portion is snapped into position after the one end portion is positioned at a predetermined location, the behavior of the spring is stabilized so that, even when the incorporating operation is conducted at a very high speed, the spring can surely be incorporated into a magnetic disk cartridge. Furthermore, cumbersome operations, such as that of pushing a shutter spring after seizing or engaging end portions of the shutter spring, are not required, the workability is excellent, and the configuration is simple. Therefore, the efficiency of the assembly operations can be improved with the use of the invention.

## Claims

1. A shutter spring assembling method for incorporating a shutter spring in a magnetic disk cartridge of a type including a case for housing a magnetic disk, a shutter which is slidably disposed on an outer side face of said case, and a shutter spring which has a substantially V-like shape and which resiliently urges said shutter in one direction starting from one end of said case, wherein an opening is provided through which said shutter spring is to be inserted into said case, the improvement wherein:
while transferring said shutter spring toward said opening by pushing a part of said spring while substantially maintaining said shutter spring on an extended plane of a face of said case, one end portion of said shutter spring, which portion is to be engaged with said case, precedes the other end portion,
said preceding one end portion is engaged with an engaging portion in said case, and
the whole of said shutter spring is pressingly inserted into said opening by further pushing said shutter spring so that said other end portion is engaged with said shutter, thereby incorporating said shutter spring into said case.

2. An assembling apparatus for incorporating a shutter spring into a magnetic disk cartridge which comprises a case for housing a magnetic disk, a shutter which is slidably disposed on an outer side face of said case, the shutter spring which has a substantially V-like shape and which resiliently urges said shutter in one direction starting from one end of said case, and an opening through which said shutter spring is to be inserted into said case, said apparatus comprising:
a posture guide having guide grooves through which said shutter spring supplied from spring moving means can be moved under a state where one end portion of said shutter spring precedes the other end portion;
a guide member having pushing guide grooves which can communicate with said guide grooves of said posture guide and through which said shutter spring is transferred to said opening; and
a pusher which can enter said pushing guide grooves, which pushes said other end portion at a desired angle by a front end face, to insert said one end portion into said opening, thereby engaging said one end portion with an engaging portion formed in said case, and which further pushes said other end portion to pressingly insert the whole of said shutter spring into said case through said opening.

3. An assembling apparatus for a shutter spring into a magnetic disk cartridge according to claim 2, wherein said pushing guide grooves have a spring insertion angle ϑ₁, and a sum of said spring insertion angle ϑ₁ and a pushing face angle ϑ₂ at which said front end face of said pusher pushes said shutter spring is substantially 180 degrees.
